# EUROPÄISCHE PATENTANMELDUNG

(11) **EP 0 983 877 A2**
(43) Veröffentlichungstag der Anmeldung: **08.03.2000**
(21) Anmeldenummer: 99116644.8
(22) Anmeldetag: 26.08.1999
(51) Int. Cl.: B60C 23/04

(54) **Kraftfahrzeugrad mit einer Luftdruckkontrollvorrichtung**

(30) Priorität: 29.08.1998 DE 19839484
(71) Anmelder: Continental Aktiengesellschaft, 30165 Hannover (DE)
(72) Erfinder: Ernst, Gerhard, Dr., 30629 Hannover (DE)

(57) **Zusammenfassung**

Die Erfindung betrifft ein Kraftfahrzeugrad 2 mit einer Felge 4, auf der ein Reifen 6 montiert ist. Im Torusraum 8 des Reifens 6 ist ein Schallabsorber 10 bzw. ein Notlaufstützkörper 26 angeordnet. In einer Aussparung 20a des Schallabsorbers 10 bzw. des Notlaufstützkörpers 26 ist eine Sensoreinheit 12 eingebettet.

## Beschreibung

Die Erfindung betrifft ein Kraftfahrzeugrad mit einer Felge, auf der ein Reifen montiert ist, wobei in dem Torusraum des Reifens eine Sensoreinheit angeordnet ist.

Die Sensoreinheit sendet Daten an eine Zentraleinheit aus und empfängt ggf. auch Daten von dieser. Im folgenden wird davon ausgegangen, daß es sich bei der Sensoreinheit um eine Luftdruckkontrollvorrichtung handelt, es wird jedoch ausdrücklich darauf hingewiesen, daß die Erfindung nicht darauf beschränkt ist.

Die richtige Einstellung des Luftdrucks von Kraftfahrzeugrädern ist im Hinblick auf unterschiedliche Aspekte wichtig. Einerseits führt ein zu hoher oder zu niedriger Luftdruck zu einem erhöhten Reifenverschleiß, so daß die Kraftfahrzeugreifen vorzeitig ausgetauscht werden müssen, was unnötige Kosten verursacht. Andererseits birgt insbesondere ein zu niedriger Luftdruck ein erhebliches Sicherheitsrisiko in sich, da er eine erhöhte Walkarbeit der Reifenflanken verursacht, was zu einer starken Temperaturerhöhung des Kraftfahrzeugreifens führt. Infolgedessen nimmt die Festigkeit der Reifenflanken deutlich ab, was zu einem 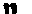 Platzen" des Kraftfahrzeugreifens und somit insbesondere bei hohen Geschwindigkeiten zu schweren Verkehrsunfällen führen kann.

Aus den genannten Gründen muß der Luftdruck von Kraftfahrzeugreifen regelmäßig überprüft werden, was von dem Kraftfahrzeugführer aus unterschiedlichen Gründen häufig versäumt wird. Deshalb sind bereits Luftdruckkontrollsysteme entwickelt worden, die jedem Reifen zugeordnet eine Luftdruckkontrollvorrichtung enthalten, die den Luftdruck von Kraftfahrzeugreifen automatisch messen und zumindest bei einer kritischen Abweichung von einem Soll-Luftdruck ein dem gemessenen Luftdruck entsprechendes Signal an eine Zentraleinheit senden. Die Zentraleinheit meldet den zu niedrigen Luftdruck dem Kraftfahrzeugführer. Die Luftdruckkontrollvorrichtungen können auf unterschiedliche Art und Weise im Torusraum des Reifens angeordnet werden.

So ist es beispielsweise aus der DE 196 13 936 A1 bekannt, die Luftdruckkontrollvorrichtung mit dem Teil des Ventils des Kraftfahrzeugrades zu verbinden, der in den Torusraum des Reifens hineinragt. Hierbei bilden das Ventil und das Gehäuse der Luftdruckkontrollvorrichtung einen festen Verbund, wobei die genannten Bestandteile derartig ausgebildet sind, daß sie ohne eine Beschädigung voneinander getrennt werden können. Hierdurch wird es möglich, ein beschädigtes Ventil ohne Zerstörung der Luftdruckkontrollvorrichtung von dieser zu trennen, so daß das Ventil ersetzt und die Luftdruckkontrollvorrichtung weiter verwendet werden kann.

Es ist festzustellen, daß durch die Befestigung der Luftdruckkontrollvorrichtung am Ventil eine sichere Positionierung der Luftdruckkontrollvorrichtung im Tiefbett der Felge gewährleistet ist. Da jedoch sowohl das Ventil als auch das Gehäuse der Luftdruckkontrollvorrichtung besonders ausgebildet werden muß, um diese am Ventil zu befestigen, verteuern sich insbesondere die Kosten des Ventils erheblich. Darüber hinaus muß die Formgebung des Gehäuses der Luftdruckkontrollvorrichtung der Befestigung dieser am Ventil unterworfen werden. Eine Formgebung des Gehäuses im Hinblick auf die Sende- und Empfangsfähigkeit der Luftdruckkontrollvorrichtung ist daher eingeschränkt.

Aus der nachveröffentlichten deutschen Patentanmeldung mit dem Aktenzeichen 197 56 659 ist es bekannt, die Luftdruckkontrollvorrichtung mit einem flachen Befestigungselement zu versehen, das bei der Montage des Reifens zwischen dem Reifenwulst und der Feige derartig eingeklemmt wird, daß die Luftdruckkontrollvorrichtung innerhalb des Reifens an der Innenwand des Reifens und an der Feige zur Anlage kommt und das Befestigungselement durch den Reifenwulst in seiner Position arretiert bleibt.

Um die Luftdruckkontrollvorrichtung gemäß der oben genannten Druckschrift im Torusraum des Reifens befestigen zu können, muß diese lediglich mit einem flachen Befestigungsträger versehen werden, wodurch keine hohen Kosten verursacht werden. Es ist jedoch festzustellen, daß die Luftdruckkontrollvorrichtung bei der Montage des Reifens auf der Feige zerstört werden kann. Darüber hinaus ist eine sichere Fixierung der Luftdruckkontrollvorrichtung durch die Arretierung des Befestigungselementes zwischen dem Reifenwulst und der Felge nicht gewährleistet. Schließlich bedarf es auch einer besonderen Formgebung des Gehäuses der Luftdruckkontrollvorrichtung, damit diese an der Innenwand des Reifens und an der Felge zur Anlage kommt und dort stabil fixiert wird. Somit ist es auch hier nicht möglich, das Gehäuse der Luftdruckkontrollvorrichtung im Hinblick auf die Sende- und Empfangsfähigkeit dieser zu optimieren.

Aus der DE 37 36 803 A1 ist es bekannt, eine Luftdruckkontrollvorrichtung im Tiefbett einer Felge zu befestigen, auf der der Reifen derartig aufgezogen ist, daß der Reifenwulst die Felge von außen umgreift. Der Druckschrift ist nicht zu entnehmen, wie die Luftdruckkontrollvorrichtung im einzelnen im Tiefbett der Felge befestigt wird.

Der Erfindung liegt die Aufgabe zugrunde, ein Kraftfahrzeugrad zu schaffen, in dessen Torusraum eine Sensoreinheit auf einfache Art und Weise befestigt werden kann.

Gemäß dem kennzeichnenden Merkmal des Anspruchs 1 wird die Aufgabe dadurch gelöst, daß sich im Torusraum des Reifens ein Schallabsorber bzw. Notlaufstützkörper befindet, in dem die Sensoreinheit eingebettet oder an dem die Sensoreinheit befestigt ist. Vorzugsweise ist der Schallabsorber bzw. der Notlaufstützkörper an der Felge des Kraftfahrzeugrades befestigt.

Der Grundgedanke der Erfindung ist darin zu sehen, daß die Sensoreinheit an einem Element befestigt bzw. in diesem eingebettet wird, das bei modernen Kraftfahrzeugrädern ohnehin im Torusraum des Reifens angeordnet ist.

Die mit der Erfindung erzielten Vorteile sind insbesondere darin zu sehen, daß die Sensoreinheit mit geringem Aufwand in dem Schallabsorber bzw. dem Notlaufstützkörper eingebettet bzw. an diesem befestigt werden kann. So ist es beispielsweise möglich, den Schallabsorber als Schaumstoffkörper auszubilden, in den die Sensoreinheit eingebettet wird. Es ist ebenfalls möglich, den Notlaufstützkörper als massives Elastomerbauteil auszubilden, in den die Sensoreinheit eingebettet wird. Ein weiterer Vorteil der Erfindung ist darin zu sehen, daß man insbesondere in dem Fall, in dem die Sensoreinheit in den Schallabsorber bzw. in den Notlaufstützkörper eingebettet wird, bezüglich der Formgebung des Gehäuses der Sensoreinheit unabhängig ist, da die Sensoreinheit nicht bündig an bestimmten Grenzflächen, deren Form vorgegeben ist, anliegen muß. Somit ist es möglich, die Formgebung des Gehäuses im Hinblick auf eine optimale Sende- und Empfangsleistung der Sensoreinheit zu optimieren. Ein weiterer Vorteil der Erfindung ist darin zu sehen, daß eine in einen Schallabsorber bzw. Notlaufstützkörper eingebettete Sensoreinheit ein hohes Gewicht aufweisen kann, da die bei einer Rotation des Kraftfahrzeugrades auf die Sensoreinheit wirkenden Zentrifugalkräfte von den genannten Elementen aufgenommen werden. Es ist somit möglich, die Sensoreinheit zur dauerhaften Energieversorgung mit einer Batterie hoher Kapazität zu versehen. Die genannten Vorteile werden erreicht, ohne die Funktionalität des Schallabsorbers bzw. des Notlaufstützkörpers wesentlich einzuschränken.

Gemäß einem Ausführungsbeispiel der Erfindung nach Anspruch 2 füllt der Schallabsorber bzw. der Notlaufstützkörper das Tiefbett der Felge zumindest teilweise auf. In diesem Fall ist der Schallabsorber bzw. der Notlaufstützkörper derart ausgebildet, daß er das Montieren des Reifens auf der Feige nicht behindert. Entsprechende Ausbildungen eines Schallabsorbers bzw. eines Notlaufstützkörpers sind dem Fachmann bekannt, so daß an dieser Stelle nicht näher darauf eingegangen werden soll. Alternativ ist es möglich, die Feige des Kraftfahrzeugrades derart auszubilden, daß der Reifen beim Montieren auf der Felge nicht durch das Tiefbett der Felge geführt zu werden braucht. Dies ist beispielsweise bei Felgen der Fall, auf denen der Reifen derart montiert wird, daß die Reifenseitenwand die Felge von außen umgreift und der Reifenwulst außerhalb des Torusraumes des Reifens auf der Felge montiert wird (derartige Feigen sind beispielsweise in der oben genannten DE 37 36 803 A1 gezeigt und dem Fachmann darüber hinaus bereits bekannt). Alternativ kann die Feige aus zwei Teilen bestehen, wobei beim Montieren des Reifens auf der Felge zunächst ein Reifenwulst auf einem Teil der Felge und der andere Reifenwulst auf dem anderen Teil der Felge montiert wird und die beiden Felgenbestandteile danach miteinander verbunden werden. Ein derartiger Aufbau ist beispielsweise bei LKW-Feigen zu finden und ist dem Fachmann ebenfalls hinlänglich bekannt, so daß an dieser Stelle nicht näher darauf eingegangen zu werden braucht.

Gemäß einer Weiterbildung der Erfindung nach Anspruch 3 umschließt der Schallabsorber bzw. der Notlaufstützkörper das Tiefbett ringförmig. Der Vorteil dieser Weiterbildung ist darin zu sehen, daß durch den Schallabsorber bzw. den Notlaufstützkörper bei einer rotationssymmetrischen Ausbildung keine Unwuchten entstehen. Ein weiterer Vorteil ist darin zu sehen, daß bei einer derartigen Ausbildung des Schallabsorbers bzw. des Notlaufstützkörpers eine optimale Funktionalität dieser Elemente gewährleistet werden kann.

Gemäß einer Weiterbildung der Erfindung nach Anspruch 4 enthält das Kraftfahrzeugrad auf der der Sensoreinheit radial gegenüberliegenden Seite ein Ausgleichgewicht, um die durch die Sensoreinheit entstehende Unwucht auszugleichen. Gemäß der Weiterbildung nach Anspruch 5 wird das Ausgleichgewicht in den Schallabsorber bzw. Notlaufstützkörper eingebettet oder an diesem befestigt. Der Vorteil dieser Weiterbildung ist darin zu sehen, daß bereits bei der Herstellung des Schallabsorbers bzw. des Notlaufstützkörpers das für die Sensoreinheit notwendige Ausgleichgewicht in die genannten Elemente eingebettet bzw. an diesen befestigt werden kann. Bevorzugt wird das Ausgleichsgewicht in der gleichen radialen und axialen Position am Schallabsorber bzw. am Notlaufstützkörper befestigt bzw. in diesen eingebettet. In diesem Fall kann das Ausgleichgewicht 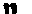 analog" zur Luftdruckkontrollvorrichtung ausgebildet sein, d. h. die gleiche äußere Formgebung und die gleiche Dichte aufweisen. Bei der Herstellung eines Schallabsorbers bzw. des Notlaufstützkörpers können dann zwei radial gegenüberliegende Aussparungen gleicher Größe vorgesehen werden, wobei in einer Aussparung die Sensoreinheit und in die andere Aussparung das Ausgleichgewicht eingelegt wird.

Gemäß einer Weiterbildung der Erfindung nach Anspruch 6 enthält der Schallabsorber einen in seiner Umfangsrichtung umlaufendes Festigkeitsträgerband. Der Vorteil dieser Weiterbildung ist darin zu sehen, daß durch das Festigkeitsträgerband die Stabilität des Schallabsorbers gewährleistet ist, da durch das Festigkeitsträgerband auf den Schallabsorber einwirkende Zentrifugalkräfte aufgenommen werden können.

Gemäß einer Weiterbildung der Erfindung nach Anspruch 7 deckt das Festigkeitsträgerband die radial äußere Oberfläche des Schallabsorbers ab. Der Vorteil dieser Weiterbildung ist darin zu sehen, daß durch eine derartige Positionierung der Schallabsorber bei einer Rotation des Kraftfahrzeugrades nach außen gegen das Festigkeitsträgerband gedrückt und daher nur auf Druck belastet wird. Das Festigkeitsträgerband stellt eine 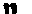 natürliche Begrenzung" für den Schallabsorber dar, so daß der Schallabsorber keine radial verlaufenden Festigkeitsträger aufzuweisen braucht, die eine weitere radiale Ausdehnung nach außen unterbinden müssen. Der Schallabsorber braucht ausschließlich der Bedingung zu genügen, daß er unter den herrschenden Zentrifugalkräften nicht soweit komprimiert wird, daß seine Funktion sehr stark eingeschränkt wird bzw. verlorengeht.

Gemäß einer Weiterbildung der Erfindung nach Anspruch 8 enthält das Festigkeitsträgerband nichtmetallische Festigkeitsträger, z. B. aus Nylon, Polyester oder Aramid. Die Festigkeitsträger können gegebenenfalls von einem elastomeren Mantel umgeben sein. Der Vorteil dieser Weiterbildung ist darin zu sehen, daß eine durch das Festigkeitsträgerband hervorgerufene Abschirmung der Sensoreinheit gegenüber elektromagnetischen Feldern ausgeschlossen ist.

Gemäß einer Weiterbildung der Erfindung nach Anspruch 9 wird die Sensoreinheit in einer Aussparung des Schallabsorbers eingebettet, die von dem Festigkeitsträgerband abgedeckt ist. Der Vorteil dieser Weiterbildung ist darin zu sehen, daß die Sensoreinheit lediglich in die Aussparung des Schallabsorbers eingelegt zu werden braucht, was die Montage vereinfacht. Ein Ausgleichgewicht an der radial gegenüberliegenden Seite der Sensoreinheit kann ebenfalls in eine Aussparung des Schallabsorbers eingebettet werden, die von dem Festigkeitsträger abgedeckt ist. Beide Aussparungen können die gleiche Form aufweisen, wie es bereits im Zusammenhang mit Anspruch 5 erläutert wurde.

Gemäß einer Weiterbildung der Erfindung nach Anspruch 10 enthält der Schallabsorber bzw. der Notlaufstützkörper eine metallische Struktur, die als Sendeempfangsantenne für die Sensoreinheit dient. Der Vorteil dieser Weiterbildung ist darin zu sehen, daß die Antenne großflächig und mit hoher Güte ausgebildet werden kann und daß die Sensoreinheit nur ein kleines Gehäuse benötigt. Die Sensoreinheit kann somit in eine kleine Aussparung des Schallabsorbers bzw. des Notlaufstützkörpers eingebettet werden, die die Funktionalität der genannten Elemente nicht einschränken. Die Kopplung zwischen der Antenne und der Sensoreinheit kann induktiv, kapazitiv oder ohmsch erfolgen. Dies ist dem Fachmann bekannt, so daß an dieser Stelle nicht näher darauf eingegangen zu werden braucht.

Gemäß einer Weiterbildung der Erfindung nach Anspruch 11 ist die metallische Struktur, z. B. in Form eines metallischen Klebestreifens, auf dem radial äußeren Umfang des Schallabsorbers bzw. des Notlaufstützkörpers angeordnet. Der Vorteil dieser Weiterbildung ist darin zu sehen, daß durch eine derartige Positionierung die Antenne einen optimalen Wirkungsgrad hat.

Ein Ausführungsbeispiel und weitere Vorteile der Erfindung werden im Zusammenhang mit den nachstehenden Figuren erläutert, darin zeigt:
- Fig. 1: ein Querschnitt durch ein Kraftfahrzeugrad,
- Fig. 2: einen Längsschnitt durch ein Kraftfahrzeugrad,
- Fig. 3: ein Querschnitt durch ein Kraftfahrzeugrad.

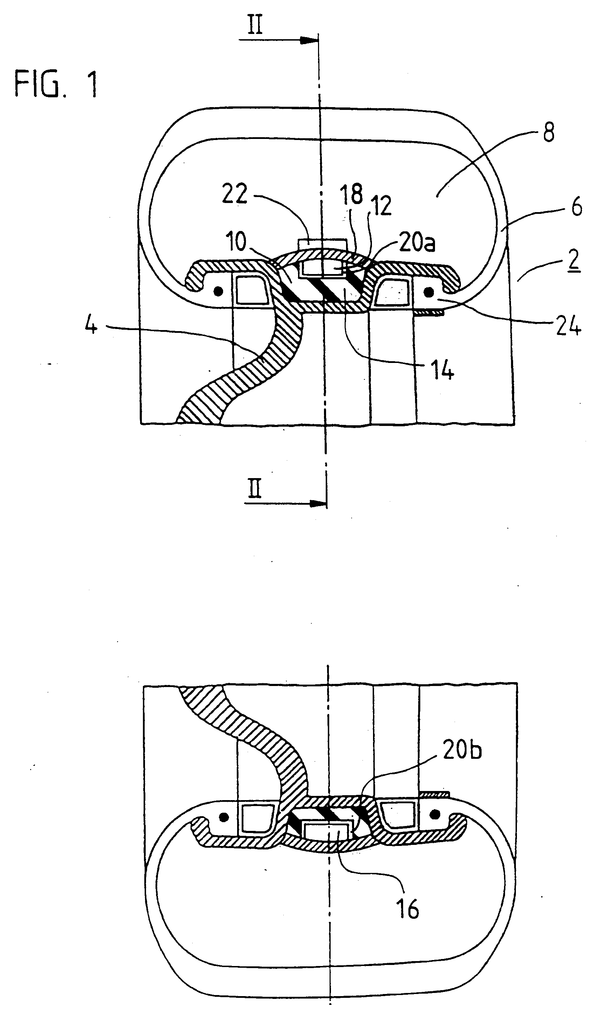

Figur 1 zeigt ein Kraftfahrzeugrad 2 mit einer Felge 4, auf der ein Reifen 6 derart montiert ist, daß die Reifenwulste 24 die Felge 4 umgreifen und außerhalb des Torusraumes 8 des Reifens 6 unterhalb der Feige 4 radial innen angeordnet sind. Bei einer derartigen Montage des Reifens 6 auf der Feige 4 wird das Tiefbett 14 der Feige 4 nicht benötigt.

Im Tiefbett 14 der Felge 4 ist ein Schallabsorber 10 in Form eines Schaumstoffkörpers befestigt. Der Schaumstoffkörper 10 umschließt das Tiefbett 14 ringförmig und füllt es vollständig auf.

In einer nach radial außen offenen Aussparung 20a des Schaumstoffkörpers 10 ist eine Sensoreinheit 12 in Form einer Luftdruckkontrolleinheit eingebettet. Die radial äußere Oberfläche des Schaumstoffkörpers 10 und die Aussparung 20a wird durch ein in seiner Umfangsrichtung umlaufendes Festigkeitsträgerband 18 abgedeckt. Die Luttdruckkontrollvorrichtung 12 wird durch das Festigkeitsträgerband 18 auch bei einer Rotation des Kraftfahrzeugrades 2 in der Aussparung gehalten. Zusätzlich kann die Luftdruckkontrollvorrichtung 12 in der Aussparung verklebt sein.

Das Festigkeitsträgerband 18 enthält (in der Figur nicht dargestellte) in Umfangsrichtung verlaufende nichtmetallische Festigkeitsträger, z. B. aus Nylon, Polyester oder Aramid.

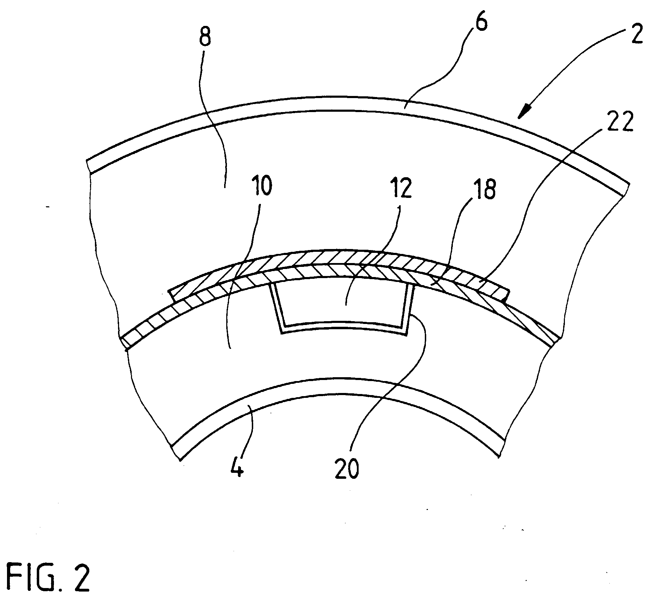

Auf dem radial äußeren Umfang des Festigkeitsträgers 18 ist ein metallischer Klebestreifen 22 aufgeklebt (s. auch Figur 2, die einen Querschnitt entlang der in der Figur 1 eingezeichneten Linie II/II zeigt). Der metallische Klebestreifen 22 dient als Antenne 22 für die Luftdruckkontrollvorrichtung 12 und ist dazu mit dieser induktiv, kapazitiv oder über eine elektrische Leitung verbunden.

Das Kraftfahrzeugrad enthält auf der der Luftdruckkontrolllvorrichtung 12 gegenüberliegenden Seite ein Ausgleichgewicht 16. Das Ausgleichgewicht 16 weist den gleichen axialen und radialen Abstand vom Mittelpunkt des Rades auf wie die Luftdruckkontrollvorrichtung 12 und ist im Schaumstoffkörper 10 eingebettet. Ferner weist es das gleiche Gewicht und die gleiche äußere Form wie die Luftdruckkontrollvorrichtung 12 auf, so daß die Aussparung 20b die gleiche Form aufweisen kann wie die Aussparung 20a. Das Ausgleichgewicht 16 wird ebenfalls durch das Festigkeitsträgerband 18 in der Aussparung 20b fixiert. Zusätzlich kann das Ausgleichgewicht 16 verklebt werden.

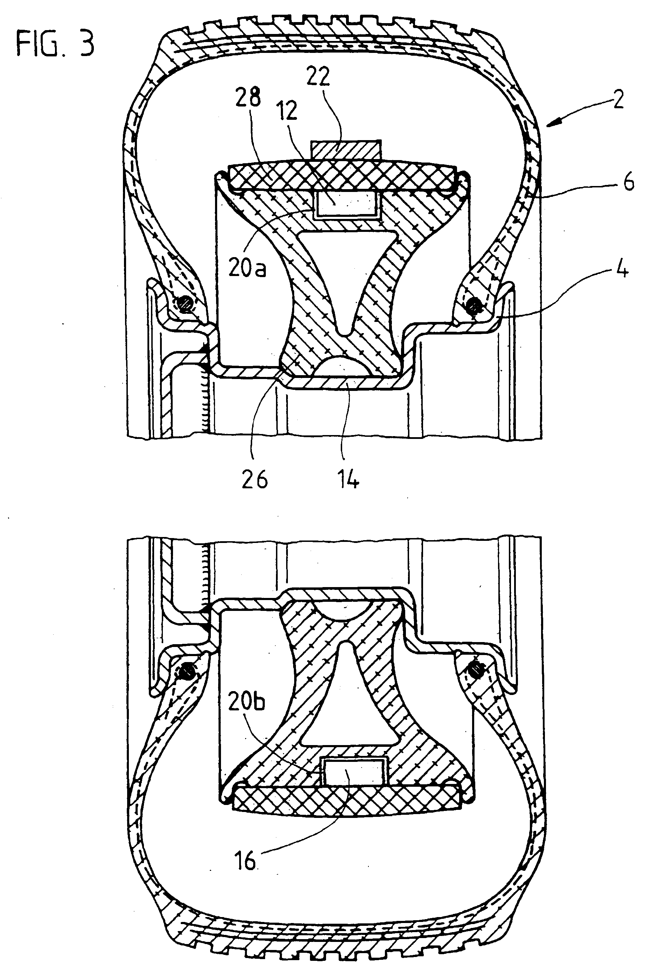

Figur 3 zeigt ein Kraftfahrzeugrad 2 mit einer Felge, auf der ein Reifen 6 montiert ist. Im Torusraum 8 des Reifens 6, insbesondere im Tiefbett 14 der Felge 6, ist ein Notlaufstützkörper 26 angeordnet, der die Felge 4 ringförmig umschließt. Der Aufbau des Notlaufkörpers 26 ist im einzelnen in der DE 37 20 706 A1 erläutert, so daß an dieser Stelle nicht näher darauf eingegangen werden soll. In seiner radial äußeren Oberfläche enthält der Notlaufstützkörper eine nach radial außen offene Aussparung 20a, in der eine Luftdruckkontrollvorrichtung 12 eingebettet ist. Die radial äußere Oberfläche des Notlaufstützkörpers 26 wird von einem Versteifungsring 28 umschlossen, der auch die Aussparung 20a verschließt. Durch den Versteifungsring 28 wird die Luftdruckkontrollvorrichtung 12 in der Ausaparung 20a fixiert. Zusätzlich kann die Luftdruckkontrollvorrichtung in der Aussparung 20a verklebt werden.

Auf der radial gegenüberliegenden Seite der Luftdruckkontrollvorrichtung 12 ist in eine Aussparung 20b ein Ausgleichgewicht 16 in den Notlaufstützkörper 26 eingelegt. Bezüglich der Größe und der Positionierung des Ausgleichgewichts wird auf die Figurenbeschreibung zu den Figuren 1 und 2 verwiesen. Auch die Aussparung 20b wird durch den Versteifungsring 28 abgedeckt, so daß das Ausgleichgewicht 16 in den Aussparung 20b fixiert ist. Zusätzlich kann das Ausgleichgewicht 16 verklebt werden.

### Bezugszeichenliste

- 2: Kraftfahrzeugrad
- 4: Felge
- 6: Reifen
- 8: Torusraum
- 10: Schallabsorber
- 12: Sensoreinheit
- 14: Tiefbett
- 16: Ausgleichgewicht
- 18: Festigkeitsträgerband
- 20a, b: Aussparung
- 22: Antenne
- 24: Reifenwulst
- 26: Notlaufstützkörper
- 28: Versteifungsring

## Patentansprüche

1. Kraftfahrzeugrad (2) mit einer Felge (4), auf der ein Reifen (6) montiert ist, wobei in dem Torusraum (8) des Reifens (4) eine Sensoreinheit (12) angeordnet ist,
**dadurch gekennzeichnet,** daß
sich im Torusraum (8) ein Schallabsorber (10) bzw. ein Notlaufstützkörper (26) befindet, in dem die Sensoreinheit (12) eingebettet oder an dem die Sensoreinheit (12) befestigt ist.

2. Kraftfahrzeugrad (2) nach Anspruch 1, dadurch gekennzeichnet, daß der Schallabsorber (10) bzw. der Notlaufstützkörper (26) das Tiefbett (14) der Felge (4) zumindest teilweise ausfüllt.

3. Kraftfahrzeugrad (2) nach einem der Ansprüche 1 bis 2, dadurch gekennzeichnet, daß der Schallabsorber (10) bzw. der Notlaufstützkörper (26) das Tiefbett (14) ringförmig umschließt.

4. Kraftfahrzeugrad (2) nach einem der Ansprüche 1 bis 3, dadurch gekennzeichnet, daß das Kraftfahrzeugrad (2) auf der der Sensoreinheit (12) radial gegenüberliegenden Seite ein Ausgleichgewicht (16) enthält.

5. Kraftfahrzeugrad (2) nach den Ansprüchen 2 und 4, dadurch gekennzeichnet, daß das Ausgleichgewicht (16) in den Schallabsorber (10) bzw. Notlaufstützkörper (26) eingebettet oder an diesem befestigt ist.

6. Kraftfahrzeugrad (2) nach einem der Ansprüche 2 bis 5, dadurch gekennzeichnet, daß der Schallabsorber (10) ein in seiner Umfangsrichtung umlaufendes Festigkeitsträgerband (18) enthält.

7. Kraftfahrzeugrad (2) nach Anspruch 6, dadurch gekennzeichnet, daß das Festigkeitsträgerband (18) die radial äußere Oberfläche des Schallabsorbers (10) abdeckt.

8. Kraftfahrzeugrad (2) nach einem der Ansprüche 6 bis 7, dadurch gekennzeichnet, daß das Festigkeitsträgerband (18) nichtmetallische Festigkeitsträger, z. B. aus Nylon, Polyester oder Aramid, enthält.

9. Kraftfahrzeugrad (2) nach einem der Ansprüche 7 bis 8, dadurch gekennzeichnet, daß die Sensoreinheit (12) in eine Aussparung (20a) des Schallabsorbers (10) eingebettet ist, die von dem Festigkeitsträger (18) abgedeckt ist.

10. Kraftfahrzeugrad (2) nach einem der Ansprüche 1 bis 9, dadurch gekennzeichnet, daß der Schallabsorber (10) bzw. Notlaufstützkörper (26) eine metallische Struktur (22) enthält, die als Sendeempfangsantenne für die Sensoreinheit (12) dient.

11. Kraftfahrzeugrad (2) nach Anspruch 10, dadurch gekennzeichnet, daß die metallische Struktur (22), z. B. in Form eines metallischen Klebestreifens (22), auf dem radial äußeren Umfang des Schallabsorbers (10) bzw. des Notlaufstützkörpers (26) angeordnet ist.
